# EUROPEAN PATENT SPECIFICATION

(11) **EP 0 367 528 B1**
(45) Date of publication and mention of the grant of the patent: **31.01.1996**
(21) Application number: 89311169.0
(22) Date of filing: 30.10.1989
(51) Int. Cl.: G06F 165/00, G05D 1/02

(54) **Hierarchical control system for automatically guided vehicles**
Hierarchisches Leitsystem für automatisch gesteuerte Fahrzeuge
Système de contrôle hiérarchique pour véhicules guidés automatiquement

(30) Priority: 31.10.1988 US 265068
(43) Date of publication of application: 09.05.1990
(73) Proprietor: TEXAS INSTRUMENTS INCORPORATED, Dallas Texas 75265 (US)
(72) Inventor: Summerville, David F., Garland Texas 75041 (US); Wand, Martin A., Plano Texas 75075 (US); Williston, John P., Plano Texas 75075 (US); Doty, Thomas J., Dallas Texas 75243 (US)
(74) Representative: Abbott, David John

(56) References cited:
- EP-A- 0 213 939
- WO-A-88/04081
- US-A- 4 023 753

## Description

This Patent Application is a continuation-in-part of U.S. Patent Application Serial No. 129,914 Filed on December 4, 1987, which is a divisional of U.S. Patent Application Serial No. 771,379 Filed on August 30, 1985, which is incorporated by reference hereby.

This invention is related to the following EUROPEAN Patent Applications, assigned to Texas Instruments Incorporated, which by reference are incorporated herein: EP-A-0 213 939, EP-A-0 213 938 and EP-A-0 221 643.

This invention is related to the following U.S. Patent Applications, assigned to Texas Instruments Incorporated, which by reference are incorporated herein, Ser. Nos.; 222,322 (filed on July 20, 1988); 195,345 (filed on May 12, 1988); 129,914 (filed on Dec. 4, 1987); 909,737 (filed on Sept. 19, 1986); and 191,834 (filed on May 9, 1988).

This invention is related to the following EUROPEAN Patent Applications, assigned to Texas Instruments Incorporated, and all claiming priority of October 31, 1988, which by reference are incorporated herein: EP-A-0 367 526 and EP-A-0 367 527.

### BACKGROUND OF THE INVENTION

### 1. Field of the Invention

This invention relates to control methods for systems of multiple autonomous or semiautonomous automatically guided vehicles (AGVs) such as mobile robots and more specifically to a hierarchy of multiple, independently operating, but integrated, software tasks.

### 2. Description of the Related Art

Conventional automatically guided vehicles (AGVs) such as those used to move materials in warehouscs and factories provide minimal (unidirectional) point-to-point movement control. Most such systems involve AGVs which follow a fixed guide track, usually either a radio transmitter antenna wire buried in the factory floor, a reflective stripe painted on the floor, or a reflective tape glued to the floor. Such methods are described in U.S. Patents 4530056, 4554724, 4562635, 4593238, and 4593239. All of these schemes purposely limit the individual vehicle's freedom of movement by constraining the AGVs to follow a physically fixed path. These systems typically employ relatively simple control methods which, by virtue of their simplicity, are not very flexible. That is, it is difficult to add or remove vehicles from the system and both difficult and expensive to change the existing pathways.

The majority of multiple-vehicle systems are wire-guided. Guide wires buried in a channel cut in the floor of the factory contain locator strips or cross-wise antennas to provide AGV location information. Sometimes, such systems provide absolute location information by attaching bar-code markers at a fixed height along the path. When an AGy passes such a marker, it "reads" the location from the marker. Wire-guided AGVs detect the location markers via radio reception. Stripe-guided AGVs use optical detectors to sense coded reflective markers. Other AGVs, such as automated forklifts, employ bar-code scanners to decode the location markers. Altering the pathways for any of these systems involves considerable facilities engineering, especially in the case of those which use buried wires.

In such systems, therefore, the individual AGVs are not capable of true point-to point motion. For example, to drive an AGV to a particular point, the system controller commands it to move until itfinds the marker for that point. The AGV effectively is "lost" to the control system until it reaches a location marker. Moreover, the AGV must stay on the physical track, passing each and every intermediate marker in the physically fixed sequence, until it "reads" its destination. There is no external position sensing and reporting system to provide "closed-loop, servo-like" operation.

Since most AGVs are front-drive units, or three-wheeled vehicles similar to tricyles (one steered drive wheel in front, two differentiated trailing wheels at the rear), they have less control when moving in reverse.

Important disadvantages to these systems include: they are limited by closed pathways, by unidirectional motion, by lack of external control of AGV motion, and by lack of independent, real-time control of individual vehicles (i.e., there is no way to redirect Vehicle 1 directly from Point A to Point X while it is en route to an original destination, say Point M).

There is a growing need for AGV systems with true point-to-point AGV motion, external sensing, real-time communication with individual AGVs, programmable pathways (logical, not physical paths), and modern control computer architectures.

For example, in a typical AGV installation the factory is divided into "blocks". Each block may be an area of the factory wherein AGVs service a given family machinery. Alternatively, each block could be a separate room in the factory. From a control standpoint, a "block" is simply an area of the factory where only one AGV can operate at a time. This greatly simplifies the control task, but the price extracted by this method may sometimes be too high: no block can use two independently operating AGVs simulataneously. While this may not seem to be a great hardship, consider the reasons for using AGVs in the first place: to improve productivity, to improve personnel safety, and to lower costs. If traditional systems are inflexible, the productivity improvements suffer. As productivity suffers, costs rise.

Solving these problems in traditional AGV systems results in ever more complex control schemes. Blocks may be subdivided into "tracks" or "cells". Once an AGV enters a block, it is immediately assigned to a subdivision (perhaps one of several rows of machinery or load stations). While such a method frees up the remaining cells, the cost in control complexity and time can be significant in installations with many AGVs.

More modern control methods are used in the Texas Instruments systems, such as those disclosed in Texas Instruments application 10942 (U.S. serial number 771,397), where an external system executive coordinates the tasks of multiple, independently running, computerized control programs which include a communications controller, a central data base, on-board vehicle controllers, a vehicle routing and scheduling controller, and a visul navigation system to provide factory-floor position information updates to free-roving mobile robot AGVs which incorporate on-board dead reckoning. In the TI systems, the AGVs travel within programmable pathways. The AGVs are omnidirectional and can rotate in place; that is, they have a zero turning radius and can move with equal control in any direction. This scheme allows the AGVs to operate in a minimum of pathway space but simultaneously to service a factory layout with maximum efficiency. Furthermore, since the path is not physically attached to the floor, and since the external control scheme can identify the individual AGVs separately, the AGVs can pass each other in any direction, with or without stopping.

Such modern control schemes require three major control system innovations: a modular and hierarchical design for the overall control system; autonomous or semiautonomous AGVs; and "intelligent" controllers.

"Intelligent" means that the control programs are capable of simultaneous and independent operation. The operating system for the system executive is a real-time, multitasking program. These characteristics allow the various parts of the control system to act independently. The central data base concept adds the capability for the independent tasks to access information from other tasks. The effect is to maximize both control (through the hierarchy) and autonomy. Therefore, each independent task must be capable of controlling itself and of interacting with the distributed control system autonomously.

### SUMMARY OF THE INVENTION

According to one aspect of the present invention there is provided a system for controlling a plurality of automatically guided vehicles (AGVs) comprising
a control means for the system including computer apparatus,
communication means for enabling the control means to send instructions to each AGV, and
a plurality of cameras coupled to the control means enabling it to ascertain the location of each AGV,
the computer apparatus having a program enabling the control means to compare the location of each AGV with a plurality of reference points and to generate instructions for each AGV to move it to a particular reference point,
characterised in that
the computer apparatus has a plurality of vehicle-application-task programs respective to the AGVs that are run concurrently with a system controller program, each vehicle-application-task program including details of a task to be performed by the associated AGV and the reference points along the route to be taken by it.

According to a second aspect of the present invention there is provided a method of controlling a plurality of automatically guided vehicles (AGVs), comprising
providing a control means for the system including computer apparatus,
providing communication means for enabling the control means to send instructions to each AGV,
providing a plurality of cameras coupled to the control means,
deriving from at least one of the cameras an indication of the actual position of an AGV,
comparing in the computer apparatus the actual position of the AGV with a plurality of reference points,
generating instructions for moving the AGV to selected reference point, and
communicating those instructions to the AGV, characterised in that the method includes
running concurrently in the computer apparatus a plurality of vehicle-application-task programs respective to the AGVs with a system controller program,
deriving from each vehicle-application-task program details of the task to be performed by the associated AGV and the movement to be made by it to reach a reference point on its route, and
sending instructions to the AGVs to cause them to make the required movements and to execute the required tasks.

The invention is a system for controlling a plurality automatically guided vehicles (AGV's) that uses a computer program which comprises sets of routines or subroutines operating as several different "intelligent" control tasks in the AGV system control computer. The system controller operates under a real-time, multitasking operating system. This gives the control system the ability to maximize both control and autonomy in the system: the individual tasks are autonomous, but they share a central data base and operate under the supervision of the system executive program.

In this environment, the invention provides a control link between an individual AGV and the system controller. The invention provides the means to associate routing and scheduling assignments with a particular AGV quickly and easily using a computer terminal.

The integrated, modular organization allows the invention to be more flexible than traditional AGV control systems.

### TERMS USED IN DESCRIBING THE INVENTION

The discussions in this application include such terms as: factory map, nodes, path, path segments, program, routine, subroutine, multitasking, and task.

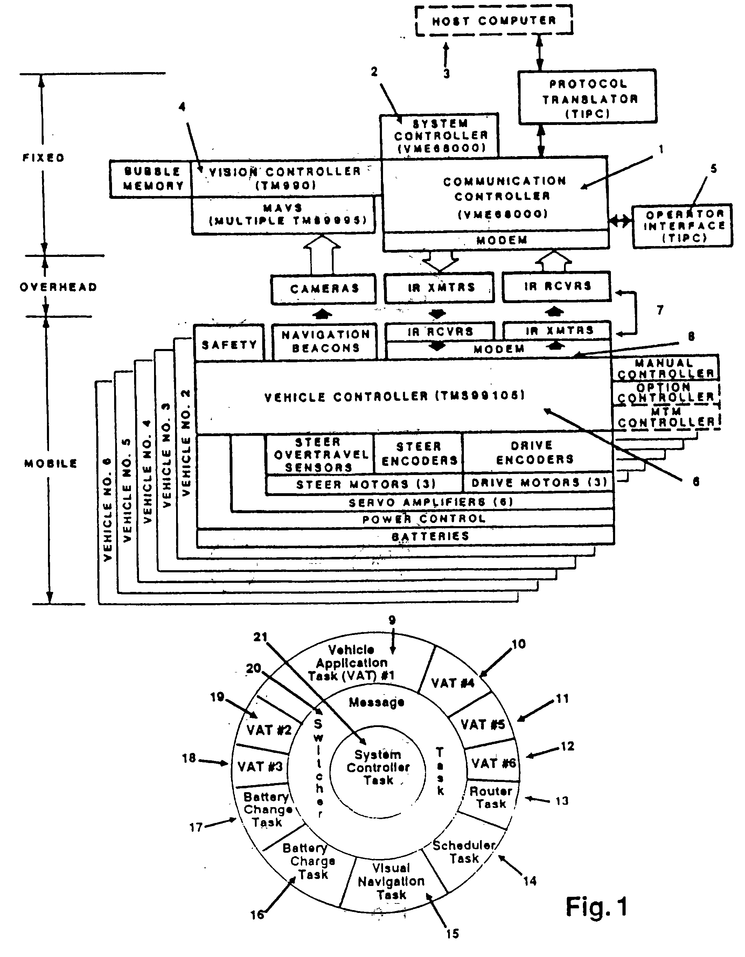

The physical operating environment of the invention is assumed to be the central control computer of an AGV system operating in a factory. The separate but simultaneously operating parts of the overall control system (i.e., the individual programs of which the invention is one) are located in separate computers which are connected by various communications links. Furthermore, from the invention's viewpoint (as shown in FIG. 1), control passes in and out through a communications controller task to the several tasks which the control system comprises. The control system as a whole runs under a multitasking operating system; that is, several tasks may share a single processor, coexisting according to the operation of the highest-level task which coordinates the separate tasks so that, in effect, to a human observer they all appear to be running simultaneously.

Each task (e.g., communication, determining a route, determining a schedule, locating an AGVs position in the factory, etc.) may be a single program or a group of programs, depending upon the limitations of the computer in which the task operates. Each program, in turn, may be a single routine, a group of routines, or a combination of routines and subroutines.

When the AGV control system is installed in the factory, the system operators "describe" the factory to the system control computer by building a "factory map" in the computer's memory. This logical map corresponds to a physical map of the factory which is made using measuring tapes or surveyor's equipment to determine the exact location of each machine, each node, and each visual navigation system camera relative to an arbitrary but fixed point called the factory origin. This map is a logical representation of the physical factory.

The information in the factory map includes the logical representation of the physical location of each node in the system. A node is any point along a pathway which is "significant" to the control system. For example, typical nodes include machine locations, parking locations, battery exchange station location, intersections, special turning points, AGV service areas, and the like. A path segment is a set of two adjacent nodes and the empty space which lies along -the line between them. A path is a collection of path segments which represents a route of travel between two particular nodes.

The factory map is stored in another computer memory as part of a shared central data base. Each of the tasks in the system has access to this store of data. This makes it easy to modify an individual task (and so change the control method) without having to change all the other tasks.

### BRIEF DESCRIPTION OF THE DRAWINGS

Fig. 1 is a drawing which has one illustration which shows the physical elements (computers, modems, and the like) of the system of which the invention is a part and another illustration which shows the control hierarchy of the software comprised by the invention.

Fig. 2 is a flowchart illustrating the highest level of control in the vehicle application task.

Fig. 3 is a flowchart illustrating the control action of the invention at initialization (when the program is started).

Fig. 4 is a flowchart illustrating the control action of the invention when the AGV is to transfer a load.

Fig. 5 is a flowchart illustrating the control action of the invention when a vehicle battery must be changed.

Fig. 6 is a flowchart illustrating the control action of the invention when a vehicle is to be parked.

Fig. 7 is a flowchart illustrating the control action of the invention when a vehicle is to be moved.

Fig. 8 is a flowchart illustrating the control action of the invention when a vehicle is to be removed from the system.

### Description of the Preferred Embodiment

In the TI systems, the overall control scheme is that of a hierarchically organized, modular, distributed computer system, as outlined in FIG. 1. Each AGV has an on-board control computer 6, in which a number of control programs may operate independently but simultaneously depending upon the job the AGV is called upon to do. The AGV communicates with the external system controller 2 via a wireless infrared transceiver system 7 and an electronic modulator/demodulator (modem) 8. The external multitasking operating system makes possible the coexistence of several other independent programs 9 through 21, each designed to do a particular set of tasks. For example, a communications controller program in the communication controller 1 includes a task 20 called the message switcher. This task acts as the communications link between the various software tasks in the system. In the TI systems, the invention described herein is a set of programs called the Vehicle Application Task, shown in FIG. 1 as 9 through 12 and 18 through 19. There is a separate Vehicle Application Task for each AGV in the system.

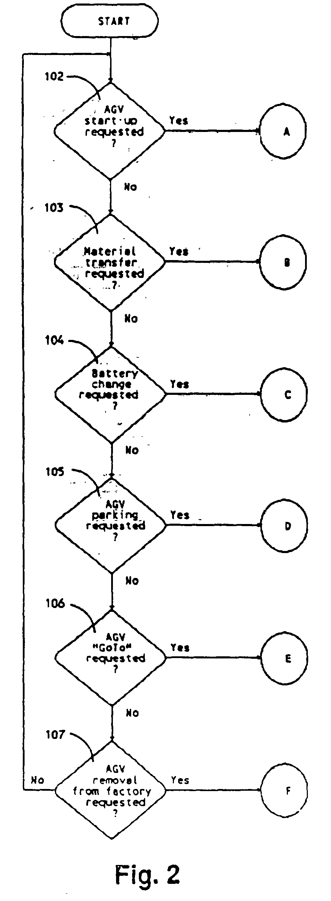

The invention includes the programs necessary to do the jobs outlined in FIG. 2, which is a high-level flowchart showing the major jobs the program may be asked to do. The software outlined in FIG. 2 is designed to run independently while communicating with the system controller. There are six such AGV application tasks in memory simultaneously, as is shown in FIG. 1. The net effect is as if six different computers were operating, each controlling a specific AGV. This gives the system the ability to control six different AGVs simultaneously (from the vantage point of a human operator). The separate Vehicle Application Tasks also communicate with other tasks in the system controller.

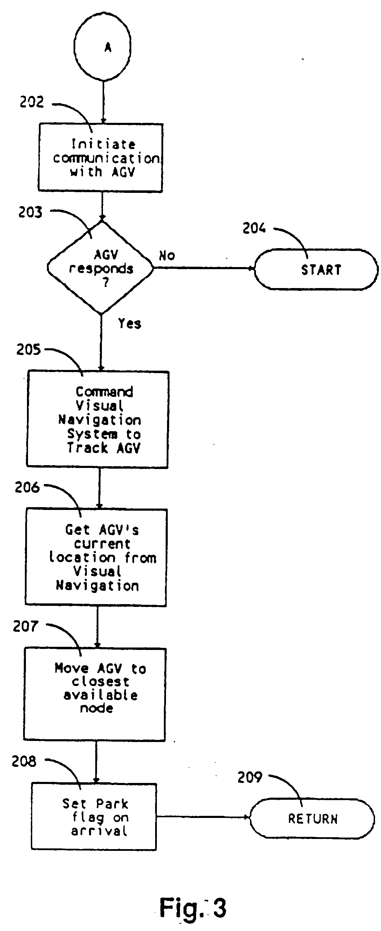

Each of the individual application tasks shown in FIG. 2 is detailed in a separate figure (FIGs. 3 through 8). Each job is in fact a separate program which has access to other individual programs, routines, or subroutines. Therefore, the design of the software is modular. Each message from the Message Switcher to the Vehicle Application Task is interpreted in a sequence prescribed by the design of the invention's high-level flow. Therefore, the organization is hierarchical.

The hierarchical organization and modular design make the invention easy to modify. For example, there is no theoretical limit to the number of AGVs which can be in a given control system because each is represented by an individual application task. The practical limit, of course, depends upon the memory size and processing speed of the control computers and on the characteristics of the multitasking operating system. In the current TI implementations, the limit is six AGVs per system controller, with no limit to the number of system controllers used in a given factory. An advantage of using the invention is that (within the capacity limits) AGVs can be added to or extracted from the overall system at will and factories can be expanded or reorganized by adding or subtracting system controllers (effectively, whole systems). This makes for much more flexible operation. Such flexibility is required in modern installations where changes in manufacturing methods and technology occur from month to month, rather than over a period of years.

A typical mode of operation for the system in which the invention is embodied might include a request to send an AGV from a parking node to a machine to pick up a load and then to send the same AGV to another machine to deposit the load. In such a case, an operator uses a computer terminal(part of the system's operator interface, see FIG. 1 item 5) to request the material transfer. As each command is entered, the operator interface passes the command message to the cummunications controller where the command is decoded. The message switcher task (20 in Fig. 1) in the communications controller (1 in Fig. 1) routes each message to the computer which can handle it. In this case, the message switcher notifies the system controller task 21 in FIG 1 (the system controller task is in the system controller computer, 2 in FIG. 1), -which calls the Vehicle Application Task for the vehicle which must transfer the material. The Vehicle Application Task, which may be any one of 9 through 12 or 18 through 19 in FIG. 1, receives the message and determines that a material transfer is requested. The Vehicle Application Task then calls the scheduler (a subroutine which is in the system controller computer 2 in FIG. 1) to determine when the transfer can be made. When it gets clearance from the scheduler subroutine, the application task calls the router task (which also is in the system controller computer 2 in FIG. 1) and requests a path for the AGV to follow. When the application task receives the path from the router, it moves the AGV along the path and notifies the system controller when the AGV arrives. One method by which this is accomplished it detailed in TI-11113, co-pending. A message also goes to the factory host computer (which is shown in FIG. 1 as 3 but which is not physically a part of the TI system) via the message switcher task because the machine to be serviced may be under the host's control. The material transfer is made under the control of the application or the factory host computer (depending upon how the system is being used) and when it is complete the program returns to the top level of the application task. Essentially, the application task keeps cycling in a loop, waiting for new instructions from the system controller.

An important advantage to the invention's method of operation is that it effects control of an individual AGV without requiring the full-time attention of any other task or the system controller computer. The system controller must be free to act as an executive, allowing for maximum freedom of movement within the system. Each copy of the invention, on the other hand, is dedicated to a single AGV, thereby maximizing control.

### Program Overview

At system start-up, no AGVs are "enabled". That is, at time zero the system controller begins running before any AGVs. Therefore, the first order of business when a Vehicle Application Task begins running is to identify the AGV to the system controller. As shown in FIG. 2, the first step of the program at 102 is to determine whether the system controller has requested that the AGV be enabled. During normal operation, the answer will be No because both the system and the AGV are in operation. But, at system start-up and whenever an AGV is being returned to the system (after maintenance, for example), the program branches to **A**, which is detailed in FIG. 3. At step **202**, the program initiates communication with the AGV. this occurs through the message switcher, the system controller's modem, the overhead IR transmitter, the AGV's IR receiver, the AGV controller's modem, and, finally, a communications application task in the AGV's on-board controller. The Vehicle Application Task awaits an answer from the AGV. If there is no answer, the program simply loops) back to the start, essentially waiting forever until it "hears from" the AGV. Error handling and time-out routines are used to deal with open program loops. A similar sequence of events occurs any time the Vehicle Application Task must communicate with AGV, and vice versa.

When an AGV responds, as at step **203**, the Vehicle Application Task notifies the visual navigation system (shown as **4** in FIG. 1) that it is to find and track the target AGV. The visual navigation system, in turn, searches the active AGVs to determine whether it can identify the specific AGV it is commanded to track. A method and specific means of accomplishing the search and identification are set forth in TI-12757, co-pending. The Vehicle Application Task expects the visual navigation system to respond with the AGV's current location. When the Vehicle Application Task receives the position update, it issues the commands necessary to move the AGV to the closest available (unoccupied, non-reserved) node. The task ten sets the AGV's park flag (a bit that, when set, signals the fact that the AGV is not moving but is enabled and can accept commands) as at step **208**.

### Transferring Material

Assuming the task's ACV already is enabled, the task will pass step **102** without branching to **A**. The next determination to be made is whether the system controller requests a material transfer. A material transfer is a sequence of moving the AGV to a node and either loading or unloading material upon arrival at the node. Some AGVs are equipped with mechanisms used to transfer material to or from a storage point on the vehicle to or from a load or unload point on a machine. These mechanisms may be either active or passive. An active mechanism is something like a robot, which can reach out and retrieve materials and then put them on the AGV. A passive mechanism is something like a set of rollers, which merely accept whatever is pushed onto them.

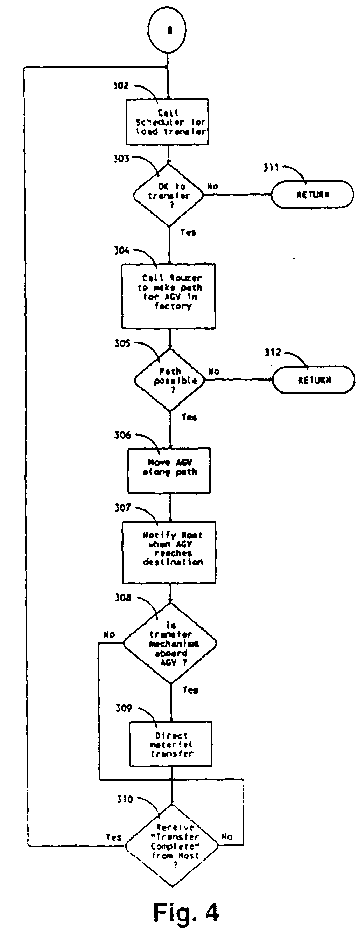

If a material transfer is requested, the Vehicle Application Task branches to **B** at step **103**. As shown in FIG. **4**, the task next requests clearance from the scheduler task. The scheduler's job is to moderate the continual stream of requests from the different Vehicle Application Tasks so that the flow of material throughout the system supervised by the system controller is orderly. If the scheduler does not approve the transfer, the routine simply returns as at step **311** and the loop repeats. If the transfer is approved, then the routine requests at step **304** a path assignment from the router task.

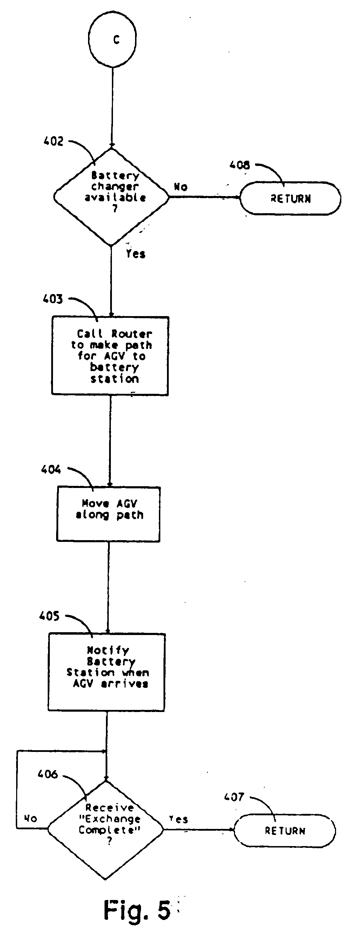

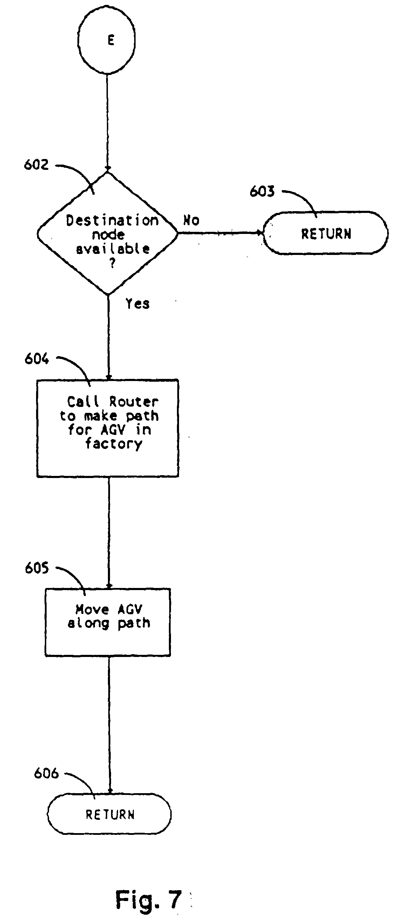

Each of the separate Vehicle Application Tasks in a system has independent access to the router task. The router's job is to find all possible paths from one point to another in the factory map and to check the rules of travel for the paths to be sure that each path it sends to the central data base is cleared for the AGV which requested it. The rules of travel are set so as to prevent collisions or deadlocks between AGVs. The method is set forward in application TI-11104, 04, co-pending. Once the path has been set and verified, as at steps **304-305** (the routine simply returns at **312** if no path can be described), the program issues a move command at step **306**. One method (and the specific means) of doing this is detailed in application TI-11113, copending. As shown in FIG. 7, if the node is free the routine calls the router task (as before) at step **604** to build a path for the AGV through the factory. Then, at step **605**, the task commands the AGV to move to its destination. The Vehicle Application Task then returns at step **606** and re-enters the top-level loop illustrated in FIG. 2 at step **106**. Returning now to FIG. 5, the AGV begins to move along the path at step **404**. The visual navigation system tracks the AGV during the move. In fact, one of the first things the Vehicle Application Task does is initiate tracking, as shown in FIG. 3 step **205**. Returning now to FIG. 4, step **307** shows that once the vehicle reports a position which matches that of the destination the AGV notifies the host computer that the AGV has arrived. What happens at this point is that the Vehicle Application Task notifies the host that the AGV has arrived. What happens at this point is that the Vehicle Application Task notifies the host that the AGV has reached its destination. The host completes its task for this AGV bv executing the instructions for what is to happen at the destination. The instructions include a message to be sent to the host computer. The system controller sends this message via another task called the Protocol Translator. The protocol translator is a "personality" module. That is, it is a program which converts messages from the system controller to messages in a format suitable for reception by a particular type of external computer. In a typical AGV system, this external computer might be a block or cell controller. In any event, the protocol translator "speaks the language of" the computer which controls the machine at the AGV's destination.

What happens next depends upon whether the system is designed to drive or to be driven by the factory controllers. At step **308** the decision is made either to have the AGV's onboard vehicle controller program or the factory machine's controller direct the transfer of material, as at step **309**. At step **310**, the Vehicle Application Task goes into a wait loop until it receives a message indicating that the transfer is complete. This message can come from either the factory host computer, the block or cell controller, or the AGV's onboard controller, depending upon the system design. Once the message is received, the material transfer loop routine contacts the scheduler (step **302**) again for further instructions. If there is no further material transfer in the schedule, the program returns at step **311** and re-enters the high-level Vehicle Application Task loop at step **103**.

It is important to note the flexibility in the material transfer routine. Each of the routines or subroutines, noted in the flowchart is an independent module. Therefore, the modules can be located anywhere, so long as the Vehicle Application Task can communicate with them. This means that for any given AGV system, some or all of the material transfer mechanisms can be aboard AGVs, some or all can be machine-dependent, some or all can be human (a machine operator simply presses a button on the AGV to signal the load transfer complete), and some or all can be from one AGV to another. Additionally, some or all of the AGVs can include active, or passive, material handling mechanisms. Finally, the control of material transfer can reside in the AGV onboard controller, the machine to be serviced, or the factory, block, or cell controllers. The modular, hierarchical organization of the Vehicle Application Task and the overall control scheme adds much versatility to conventional, more limited, AGV control schemes.

### Changing an AGV's Battery

Returning now to FIG. 2, at step **104**, the next determination is whether the AGV's battery must be changed. There are three ways a battery change can be started. The message path used depends upon where the battery change request originates. The ACV has a battery charge indicator and sensor which signals the system controller when the energy reserve drops to a certain level. The automatic battery change station includes an operator interface which can be used to signal the system controller to change a particular AGV's battery. The operator interface at the base station (where the system controller is located) also can be used to request a battery change. Regardless of where the request originates, it is the Vchicle Application Task which reacts to the request. As shown in FIG. 5, the first action is to determine whether the battery changer is available, as at step **402**. If not, the routine returns, effectively looping until the changer becomes available or until the error or time-out condition is resolved. In some systems there is no automatic battery changer. In such a case a manual battery change system is assigned a particular parking node and the routine in the Vehicle Application Task is set to answer **Yes** at step **402** if that node is available.

In any case, when the battery changer is available the routine next calls the router task to set up a path through the factory for the AGV. The origin is the AGV's current node; the destination is the parking node at the battery change station. Next, as detailed in application TI-11113, co-pending, and illustrated here at step **404**, the Vehicle Application Task issues a move command to the AGV, which moves along the path until it reaches its destination and, at step **405**, notifies the battery station on arrival. A software task which drives the automatic battery station then takes over and exchanges the discharged battery for a freshly charged one from the station. When the battery station has made the exchange, it sends a message through the communications controller to the Vehicle Application Task. Meanwhile, the Vehicle Application Task waits in a loop at step **406** for the "Exchange Complete" message. Upon receipt of this message, the routine returns at step **407**, re-entering the top-level Vehicle Application Task loop at step **104**.

As in the discussion of the previous routine, an important advantage of this approach is that since the Vehicle Application Task's structure is modular, and since it is organized hierarchically, the request to change a battery can be made from any of the other independently operating tasks. Furthermore, since the battery change station is identified simply as a node where the AGVs are directed to park, the battery change station can be moved at will or it can be deleted from the factory altogether with nothing more than an instruction entered at a computer terminal. This can be invaluable in modern manufacturing systems where machinery is moved, regrouped, and moved again as product lines change frequently. It also is useful in routine operations (for example, when a battery change station must be disabled temporarily for servicing: you simply use the operatior interface terminal to set the battery station node status to "unavailable").

### Parking an AGV

Returning now to FIG. 2, step **105** the Vehicle Application Task next checks whether the system controller has requested that the task's AGV be parked. There are a number of reasons for parking an AGV. For example, an operator might notice something wrong with the AGV or its load; rather than pressing an emergency stop button the operator may choose to park the AGV normally first. Or, if the scheduler has no jobs for a particular AGV it may send the AGV to a parking node so as to free up another path for use by working AGVs. The fact that an AGV can be commanded to park without interrupting system operation or introducing personnel into a production area adds a level of flexibility to the factory control system. The invention's means of accomplishing this adds an additional level: the system controller or another application task can decide that an AGV should be parked, without requiring operator assistance or intervention.

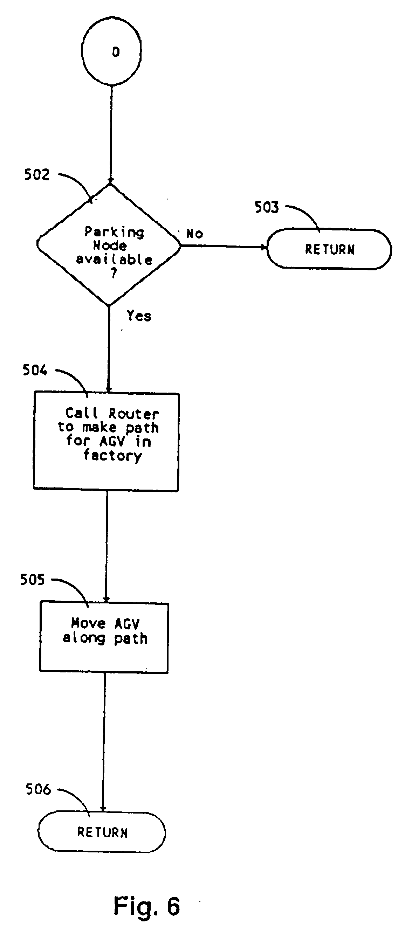

When a parking request is received, the Vehicle Application Task branches to D, which is described in FIG. 6. At step **502** the parking routine first determines whether a parking node is available. There are only two distinctions between a parking node and any other node. First, a parking node normally is "off the beaten path," as at a cul-de-sac in the factory map (the idea is that the node should only- be used for parking and not for factory machine servicde). Second, a parking node is so identified in the factory map (which allows any application program to park an AGV without being required to specify the exact node to use). In any case, either "any," or an exact, parking node can be specified. From the human operator's viewpoint, the user just commands the system to park an AGV (either at a specific location or at any available location). But in either case the system controller always assigns a specific node to the AGV to be parked. The system controller checks to be sure the node is unoccupied. If the node is occupied, the routine simply returns and loops until a free parking node is found or until the exact node, if specified, is free. Otherwise, the routine continues to step **504**, where it notifies the router task to assign a path from the AGV's current node to the parking node. This occurs in the manner identified above for steps **304** and **403**. Once the path is reserved, the Vehicle Application Task issues a move command (again, one means of accomplishing this is detailed in application TI-11113, co-pending) and the AGV moves along the path to the parking node. When the AGV reaches the parking node, it stops and sets it parking flag (a status bit) so that the different application tasks can identify the AGV's status as they continue operation. The routine returns at step **506** and re-enters the top-level task at step bf 105

### Moving an AGV

As shown in FIG. 2, there are several different routines identified in the top-level application task flowchart. All but the first and the last require the task's AGV to move. At first glance, it would appear to be desirable to separate the "move AGV" part of these routines and make it a stand-alone task. In traditional AGV systems as well as some newer systems which feature modular programming, this is precisely the case. However, in the Vehicle Application Task, organization is by job rather than command. The jobs, in turn, are structured as hierarchies of low-level routines or subroutines. The common routines such as "move" occur at this lowest level or organization, well away from the higher-level control loops which must be free to operate at the "system" level to improve efficiency and response time. It also is important to remember that there may be as many as six independent AGV application tasks operating simultaneously. Therefore, the midlevel programs such as those identified as branches **A** through f should be fairly self-sufficient to avoid having to wait on common low-level subroutines which may be tied up by another task.

As shown in FIG. 7, the branch at **E** begins with checking at step **602** to be sure that the destination node is available (unoccupied). If the node is occupied, the routine returns at step **603** and loops until the node is free or the application task processes another job. If the node is free, the routine calls the router task (as before) at step **604** to build a path for the AGV through the factory.

### Removing an AGV from the System

As shown in FIG. 2, the last check made at the top-level Vehicle Application Task loop is whether the system controller has requested -that the task's AGV be removed from the system. If the answer is **No** at **107**, then the current sweep of the Vehicle Application Task's loop is complete and the program returns to the start and begins again.

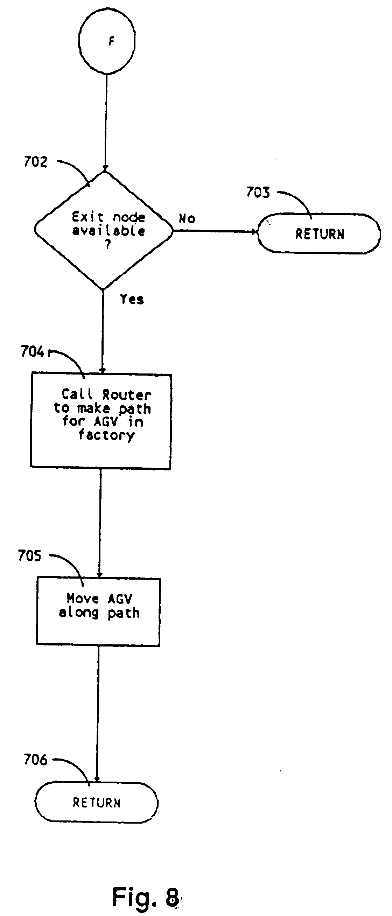

If the answer at step **107** is **Yes**, the task branches to **F**, which is described in FIG. 8. The first check, at step **702**, is whether an exit node is available (unoccupied). An exit node is a node defined to be uscd to introduce or remove vehicles from the system. The node is defined by operators when the factory map is created. If the exit node is occupied, the routine loops at step **703** until the node becomes available or the application task receives another job. If the exit node is free, the routine signals the router at step **704** (as before) to make a path through the factory for the AGV. As before, this assignment is executed by a method identical to that explained in application TI-11113, copending, or its equivalent.

## Claims

1. A system for controlling a plurality of automatically guided vehicles (AGVs) comprising
a control means (1,2,3,4,5) for the system including computer apparatus (3),
communication means for enabling the control means (1,2,3,4,5) to send instructions to each AGV, and
a plurality of cameras coupled to the control means (1,2,3,4,5) enabling it to ascertain the location of each AGV,
the computer apparatus (3) having a program (9, ..., 21) enabling the control means to compare the location of each AGV with a plurality of reference points and to generate instructions for each AGV to move it to a particular reference point,
characterised in that
the computer apparatus has a plurality of vehicle-application-task programs (9-12,18,19) respective to the AGVs that are run concurrently with a system controller program (21), each vehicle-application-task program (9-12,18,19) including details of a task to be performed by the associated AGV and the reference points along the route to be taken by it.

2. A system according to claim 1 wherein the computer program includes a plurality of task programs individual to the different functions of the system to be used by the AGV's, the task programs providing data and instructions that are transferred to the vehicle-application-task programs when required for the particular AGVs.

3. A system according to claim 1 or claim 2 including an operator interface (5) enabling an operator to enter into the computer (3) details of operations to be executed by the AGVs.

4. A system according to any one of the claims wherein the system controller program (21) selects a particular AGV and its vehicle-application-task program for an operation to be carried out and releases that AGV and its vehicle-application-task program when the operation is completed.

5. A method of controlling a plurality of automatically guided vehicles (AGVs), comprising
providing a control means (1-5) for the system including computer apparatus,
providing communication means for enabling the control means to send instructions to each AGV,
providing a plurality of cameras coupled to the control means,
deriving from at least one of the cameras an indication of the actual position of an AGV,
comparing in the computer apparatus the actual position of the AGV with a plurality of reference points,
generating instructions for moving the AGV to selected reference point, and
communicating those instructions to the AGV, characterised in that the method includes
running concurrently in the computer apparatus a plurality of vehicle-application-task programs (9-12,18,19) respective to the AGVs with a system controller program (21),
deriving from each vehicle-application-task program details of the task to be performed by the associated AGV and the movement to be made by it to reach a reference point on its route, and
sending instructions to the AGVs to cause them to make the required movements and to execute the required tasks.

6. A method according to claim 5 including transferring from task programs (13-17) individual to the different functions of the system into the vehicle-application-task programs (9-12,18,19) the data and instructions when required by the corresponding AGVs.

7. A method according to claim 5 or claim 6 including using the system controller program (21) to select a particular AGV and its vehicle-application-task program to carry out a particular operation, and causing that AGV and its vehicle-application-task program to be released on completion of the operation.

## Patentansprüche

1. System zur Steuerung mehrerer automatisch geleiteter Fahrzeuge (AGVs), umfassend
ein Steuermittel (1,2,3,4,5) für das System, das ein Computergerät (3) enthält,
Kommunikationsmittel, das es dem Steuermittel (1,2,3,4,5) zu ermöglicht, Befehle an jedes AGV zu senden, und
mehrere Kameras, die mit dem Steuermittel (1,2,3,4,5) verbunden sind und es ihm ermöglichen, den Ort jedes AGV festzustellen,
wobei das Computergerät (3) ein Programm (9,....,21) aufweist, das dem Steuermittel ermöglicht, den Ort jedes AGV mit mehreren Referenzpunkten zu vergleichen und für jedes AGV Befehle zu erzeugen, um es zu einem speziellen Referenzpunkt zu bewegen,
dadurch gekennzeichnet, daß
das Computergerät jeweils für die AGVs mehrere Fahrzeuganwendungsaufgaben-Programme (9-12,18,19) aufweist, die gleichzeitig mit einem System-Kontroller-Programm (21) ausgeführt werden, wobei jedes Fahrzeuganwendungsaufgaben-Programm (9-12,18,19) die Einzelheiten einer Aufgabe, die von dem dazugehörigen AGV durchgeführt werden soll, und die Referenzpunkte entlang der Route enthält, die von ihm eingeschlagen werden soll.

2. System nach Anspruch 1, in dem das Computerprogramm mehrere Aufgabenprogramme enthält, die für die verschiedenen Funktionen des Systems, die von den AGVs benutzt werden sollen, charakteristisch sind, wobei die Aufgabenprogramme Daten und Befehle liefern, die auf die Fahrzeuganwendungsaufgaben-Programme übertragen werden, wenn sie für die speziellen AGVs benötigt werden.

3. System nach Anspruch 1 oder Anspruch 2, das eine Bediener-Schnittstelle (5) enthält, die es dem Bediener ermöglicht, in den Computer (3) Einzelheiten der von den AGVs auszuführenden Operationen einzugeben.

4. System nach einem der Ansprüche, in dem das System-Kontroller-Programm (21) ein spezielles AGV und dessen Fahrzeuganwendungsaufgaben-Programm für eine auszuführende Operation auswählt und das AGV und dessen Fahrzeuganwendungsaufgaben-Programm freigibt, wenn die Operation abgeschlossen ist.

5. Verfahren zur Steuerung mehrerer automatisch geleiteter Fahrzeuge (AGVs), umfassend
Bereitstellen eines Steuermittels (1-5) für das System das ein Computergerät enthält,
Bereitstellen von Kommunikationsmitteln, die dem Steuermittel zu ermöglichen, Anweisungen an jedes AGV zu senden,
Bereitstellen mehrerer Kameras, die mit dem Steuermittel verbunden sind,
Herleiten einer Angabe der aktuellen Position eines AGV von wenigstens einer der Kameras,
vergleichen der aktuellen Position des AGVs mit mehreren Referenzpunkten in dem computergerät,
Erzeugen von Befehlen zur Bewegung des AGV zu einem ausgewählten Referenzpunkt, und
Mitteilen dieser Befehle an das AGV, dadurch gekennzeichnet, daß das Verfahlen enthält:
gleichzeitiges Ausführen von mehreren Fahrzeuganwendungsaufgaben-Programmen (9-12,18,19) für die entsprechenden AGVs und einem System-Kontroller-Programm (21) in der Computeranlage,
Herleiten der Einzelheiten der Aufgabe, die von dem dazugehörigen AGV ausgeführt werden soll, und der von ihm zum Erreichen eines Referenzpunkts auf seiner Route auszuführenden Bewegung und
Senden von Anweisungen an die AGVs, um sie zu veranlassen, die erforderlichen Bewegungen durchzuführen und die erforderlichen Aufgaben auszuführen.

6. Verfahren nach Anspruch 5, enthaltend die Übertragung der Daten und Befehle von Aufgabenprogrammen (13-17), die für die verschiedenen Funktionen des Systems charakteristisch sind, zu den Fahrzeuganwendungsautgaben-Programmen (9-12, 18,19), wenn sie von den entsprechenden AGVs benötigt werden.

7. Verfahren nach Anspruch 5 oder 6, enthaltend die Verwendung des System-Kontroller-Programms (21) zum Auswählen eines speziellen AGVs und seines Fahrzeuganwendungsaufgaben-Programms für die Durchführung einer speziellen Operation, und Veranlassen, daß das AGV und dessen Fahrzeuganwendungsaufgaben-Programm beim Abschluß der Operation freigegeben werden.

## Revendications

1. Système pour commander plusieurs véhicules guidés automatiquement (AGVs) comprenant
des moyens de commande (1,2,3,4,5) pour le système incluant un appareil (3) à ordinateur,
des moyens de communication pour permettre aux moyens de commande (1,2,3,4,5) d'envoyer des instructions vers chaque AGV, et
plusieurs caméras couplées aux moyens de commande (1,2,3,4,5) permettant à ceux-ci de déterminer la position de chaque AGV,
l'appareil (3) à ordinateur ayant un programme (9, ..., 21) permettant aux moyens de commande de comparer la position de chaque AGV à plusieurs points de référence et d'engendrer des instructions pour chaque AGV pour déplacer celui-ci vers un point de référence particulier,
caractérisé en ce que
l'appareil à ordinateur a plusieurs programmes (9 à 12, 18,19) de tâche d'application de véhicule relatifs aux AGVs qui fonctionnent de manière simultanée à un programme (21) de commande de système, chaque programme (9 à 12,18,19) de tâche d'application de véhicule incluant des détails d'une tâche à réaliser par l'AGV associé et les points de référence le long de la route à prendre par celui-ci.

2. Système selon la revendication 1 dans lequel le programme d'ordinateur inclut plusieurs programmes de tâche particuliers aux différentes fonctions du système à utiliser par les AGVs, les programmes de tâche fournissant des données et des instructions qui sont transférées aux programmes de tâche d'application de véhicule lorsque requis pour les AGVs particuliers.

3. Système selon la revendication 1 ou 2 incluant une interface utilisateur (5) permettant à un utilisateur d'entrer dans l'ordinateur (3) des détails des opérations à exécuter par les AGVs.

4. Système selon l'une quelconque des revendications dans lequel le programme (21) de commande de système sélectionne un AGV particulier et son programme de tâche d'application de véhicule pour une opération à mener et libère cet AGV et son programme de tâche d'application de véhicule lorsque l'opération est achevée.

5. Procédé de commande de plusieurs véhicules guidés automatiquement (AGVs), comprenant
la fourniture de moyens de commande (1 à 5) pour le système incluant un appareil à ordinateur,
la fourniture de moyens de communication pour permettre aux moyens de commande d'envoyer des instructions à chaque AGV,
la fourniture de plusieurs caméras couplées aux moyens de commande,
la déduction d'au moins l'une des caméras d'une indication de la position réelle d'un AGV,
la comparaison dans l'appareil à ordinateur de la position réelle de l'AGV avec plusieurs points de référence,
la production d'instructions pour déplacer l'AGV vers un point de référence sélectionné, et
la communication de ces instructions vers l'AGV, caractérisé en ce que le procédé inclut
le fonctionnement de manière simultanée dans l'appareil à ordinateur de plusieurs programmes (9 à 12,18, 19) de tâche d'application de véhicule associés aux AGVs avec un programme (21) de commande de système,
la déduction depuis chaque programme de tâche d'application de véhicule de détails de la tâche à réaliser par l'AGV associé et le mouvement à faire par celui-ci pour atteindre un point de référence sur sa route, et
l'envoi d'instructions aux AGVs pour faire faire à ceux-ci les mouvements requis et pour exécuter les tâches requises.

6. Procédé selon la revendication 5, incluant le transfert depuis des programmes de tâche (13 à 17) particuliers aux fonctions différentes du système dans les programmes (9 à 12,18,19) de tâche d'application de véhicule des données et instructions lorsque requises par les AGVs correspondants.

7. Procédé selon la revendication 5 ou 6, incluant l'utilisation du programme (21) de commande de système pour sélectionner un AGV particulier et son programme de tâche d'application de véhicule pour mener une opération particulière et faire que cet AGV et son programme de tâche d'application de véhicule soient libérés à la fin de l'opération.
